# EUROPÄISCHE PATENTSCHRIFT

(11) **EP 4 643 814 B1**
(45) Veröffentlichungstag und Bekanntmachung des Hinweises auf die Patenterteilung: **14.10.2026**
(21) Anmeldenummer: 24174056.2
(22) Anmeldetag: 03.05.2024
(51) Int. Cl.: A61C 13/00

(54) **VERFAHREN ZUM HERSTELLEN EINER DENTALEN RESTAURATION**
METHOD FOR PRODUCING A DENTAL RESTORATION
PROCÉDÉ DE FABRICATION D'UNE RESTAURATION DENTAIRE

(43) Veröffentlichungstag der Anmeldung: 05.11.2025
(73) Patentinhaber: Ivoclar Vivadent AG, 9494 Schaan (LI)
(72) Erfinder: VETSCH, Mathias, 9472 Grabs (CH); ESER, Atilim, 9404 Rorschacherberg (CH)
(74) Vertreter: Baldus, Oliver

(56) Entgegenhaltungen:
- WO-A1-02/076327
- WO-A1-2023/202143

## Beschreibung

Die vorliegende Erfindung betrifft ein Verfahren zum Herstellen einer dentalen Restauration, ein Computerprogramm zum Ausführen des Verfahrens und ein Herstellungsgerät mit einem Computerprogramm.

Die Druckschrift WO 02/076327 A1 betrifft ein Verfahren und eine Anordnung zum Erzeugen eines dreidimensionalen Computermodells einer Zahnrestauration oder eines Teils davon, wobei das Computermodell in einem Herstellungsprozess der besagten Restauration verwendet werden soll.

Die Druckschrift WO 2023/202143 A1 betrifft ein Gestaltungsverfahren dentaler Restaurationen basieren auf Deep Learning. Das Verfahren umfasst ein Segmentieren dreidimensionaler Segmentierungsdaten aus Gebissdaten eines Patienten und Erhalten entsprechender Zielprothesendaten, um einen Datensatz zu bilden, der die dreidimensionalen Segmentierungsdaten und die Zielprothesendaten umfasst.

Es ist die technische Aufgabe der vorliegenden Erfindung, die Herstellung einer dentalen Restauration zu verbessern.

Diese Aufgabe wird durch Gegenstände nach den unabhängigen Ansprüchen gelöst. Vorteilhafte Ausführungsformen sind Gegenstand der abhängigen Ansprüche, der Beschreibung und der Figuren.

Gemäß einem ersten Aspekt wird die vorliegende Aufgabe durch ein Verfahren zum Herstellen einer dentalen Restauration gelöst, mit den Schritten eines Bereitstellens eines Datensatzes, der die räumliche Form der dentalen Restauration wiedergibt; eines Auswählens eines Werkzeuges zum Herstellen der dentalen Restauration, das einen vorgegebenen Werkzeugradius aufweist; und eines Anpassens des Datensatzes, so dass ein Krümmungsradius an der Oberfläche der wiedergegebenen räumlichen Form größer oder gleich zu dem Werkzeugradius ist. Die räumliche Form der dentalen Restauration wird durch ein Oberflächengitter wiedergegeben, das in ein diskretes kartesisches Gitter umgewandelt wird und der Krümmungsradius wird an der Oberfläche der wiedergegebenen räumlichen Form auf Basis des diskreten kartesischen Gitters berechnet.

Durch das Verfahren wird der technische Vorteil erreicht, dass die dentale Restauration mit einer höheren Genauigkeit hergestellt werden kann und die räumliche Form der dentalen Restauration mit einer hohen Genauigkeit und mit verhältnismäßig wenigen Daten wiedergegeben werden kann. Außerdem wird beispielsweise der technische Vorteil erreicht, dass eine einfache Anpassung des Datensatzes an den Werkzeugradius vorgenommen werden kann.

In einer technisch vorteilhaften Ausführungsform des Verfahrens wird der Datensatz so angepasst, dass alle Punkte an der Oberfläche der wiedergegebenen räumlichen Form von dem Werkzeug berührbar sind. Dadurch wird beispielsweise der technische Vorteil erreicht, dass die dentale Restauration vollständig mit dem ausgewählten Werkzeug hergestellt werden kann.

In einer weiteren technisch vorteilhaften Ausführungsform des Verfahrens wird das diskrete kartesische Gitter derart angepasst, dass ein Krümmungsradius an der Oberfläche der wiedergegebenen räumlichen Form größer oder gleich des Werkzeugradius ist. Dadurch wird beispielsweise der technische Vorteil erreicht, dass die dentale Restauration mit dem ausgewählten Werkzeug hergestellt werden kann.

In einer weiteren technisch vorteilhaften Ausführungsform des Verfahrens werden die Vertices des Oberflächengitters in Richtung des angepassten diskreten kartesischen Gitters verschoben. Dadurch wird beispielsweise der technische Vorteil erreicht, dass die Anpassung des Datensatzes an den Werkzeugradius auf einfache Weise vorgenommen werden kann.

In einer weiteren technisch vorteilhaften Ausführungsform des Verfahrens wird eine Fehlerfunktion optimiert, die auf einer Entfernung zwischen den jeweiligen Vertices des Oberflächengitters und den Punkten des diskreten kartesischen Gitters basiert und/oder einer Laplace-Glättung basiert. Dadurch wird beispielsweise der technische Vorteil erreicht, dass eine glatte räumliche Form der dentalen Restauration ohne Kanten erzeugt werden kann.

In einer weiteren technisch vorteilhaften Ausführungsform des Verfahrens wird die Oberfläche der wiedergegebenen räumlichen Form in einen ersten Unterbereich, der von dem Werkzeug berührt werden kann, und einen zweiten Unterbereich unterteilt, der nicht von dem Werkzeug berührt werden kann. Dadurch wird beispielsweise der technische Vorteil erreicht, dass eine Optimierung ausschließlich auf den jeweiligen Unterbereich angewendet werden kann und sich eine Berechnungszeit verringert.

In einer weiteren technisch vorteilhaften Ausführungsform des Verfahrens wird ein Herstellungsmaterial der dentalen Restauration auf Basis des Krümmungsradius an der Oberfläche der wiedergegebenen räumlichen Form ausgewählt. Dadurch wird beispielsweise der technische Vorteil erreicht, dass die dentale Restauration naturgetreuer mit höheren Krümmungsradien hergestellt werden kann.

In einer weiteren technisch vorteilhaften Ausführungsform des Verfahrens wird das Werkzeug auf Basis des Krümmungsradius an der Oberfläche der wiedergegebenen räumlichen Form ausgewählt. Dadurch wird beispielsweise der technische Vorteil erreicht, dass ein geeignetes Werkzeug zur Herstellung der dentalen Restauration erhalten wird.

In einer weiteren technisch vorteilhaften Ausführungsform des Verfahrens ist das Werkzeug ein Fräswerkzeug oder ein Bohrer. Dadurch wird beispielsweise der technische Vorteil erreicht, dass die dentale Restauration effizient hergestellt werden kann.

In einer weiteren technisch vorteilhaften Ausführungsform des Verfahrens wird die dentale Restauration auf Basis des Datensatzes hergestellt. Dadurch wird beispielsweise der technische Vorteil erreicht, dass eine dentale Restauration mit einer hohen räumlichen Genauigkeit hergestellt wird.

Gemäß einem zweiten Aspekt wird die vorliegende Aufgabe durch ein Computerprogramm gelöst, umfassend Befehle, die bei der Ausführung des Computerprogramms durch einen Computer diesen veranlassen, das Verfahren nach dem ersten Aspekt auszuführen. Dadurch werden die gleichen technischen Vorteile wie durch das Verfahren nach dem ersten Aspekt erreicht.

Gemäß einem dritten Aspekt wird die vorliegende Aufgabe durch ein Herstellungsgerät zum Herstellen einer dentalen Restauration mit einem Computerprogramm nach dem zweiten Aspekt gelöst. Dadurch werden die gleichen technischen Vorteile wie durch das Verfahren nach dem ersten Aspekt erreicht.

Ausführungsbeispiele der Erfindung sind in den Zeichnungen dargestellt und werden im Folgenden näher beschrieben.

Es zeigen:
- Fig. 1: eine Ansicht einer dentalen Restauration;
- Fig. 2: eine Ansicht einer voxelisierten dentalen Restauration;
- Fig. 3: eine Ansicht einer dentalen Restauration für ein Werkzeug mit drei verschiedenen Werkzeugradien;
- Fig. 4: Ansichten dentaler Restaurationen mit unterschiedlichen Krümmungsradien;
- Fig. 5: Ansichten dentaler Restaurationen aus unterschiedlichen Herstellungsmaterialien; und
- Fig. 6: ein Blockdiagramm eines Verfahrens zum Herstellen einer dentalen Restauration.

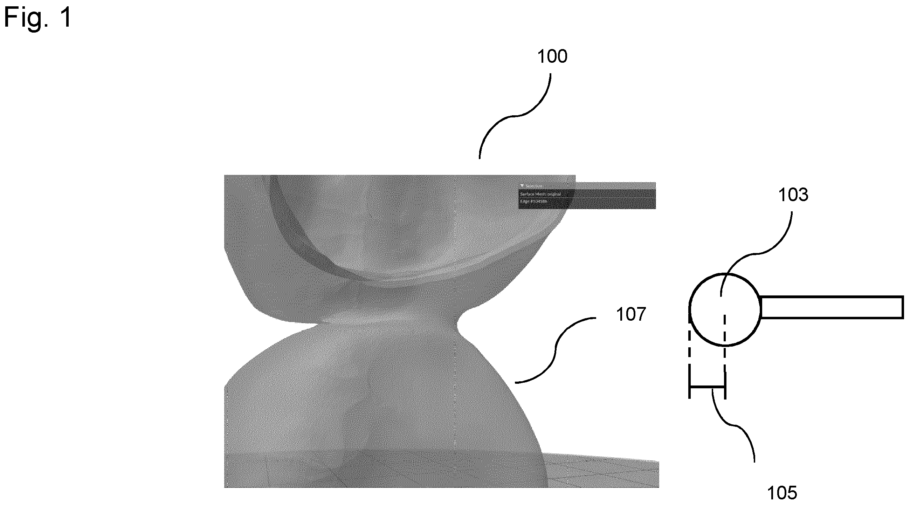

Fig. 1 zeigt eine Ansicht einer dentalen Restauration 100 mit einer vorgegebenen räumlichen Form 107. Die dentale Restauration ist beispielsweise eine Brücke, eine Krone, ein Inlay oder ein Onlay. Die dentale Restauration 100 wird mithilfe eines Computers gestaltet, beispielsweise mittels einer CAD-Software. Dabei wird die dentale Restauration 100 durch einen digitalen Datensatz wiedergegeben, der die räumliche Form 107 der dentalen Restauration 100 und andere Eigenschaften wiedergibt, wie beispielsweise das Herstellungsmaterial.

Der Datensatz umfasst hierzu die räumlichen Koordinaten von Gitterpunkten (Vertices) an der Oberfläche der dentalen Restauration 100, die miteinander durch eine Menge von Gitterlinien verbunden sind. Hierdurch entsteht ein überlappungsfreies Oberflächengitter des Raumes der dentalen Restauration 100 durch eine Menge von Gitterzellen. Die räumliche Form 107 der dentalen Restauration 100 wird durch dieses Oberflächengitter wiedergegeben.

Aus diesem ursprünglichen Datensatz kann die physische Geometrie der dentalen Restauration 100 berechnet werden, die mithilfe eines ausgewählten Werkzeugs 103 hergestellt werden kann. Hierzu werden bestimmte Krümmungsbedingungen für die Oberfläche der dentalen Restauration 100 angewendet. Bei diesem Verfahren wird die ursprüngliche räumliche Form 107 der dentalen Restauration 100 so verändert, dass alle Punkte auf der Oberfläche der dentalen Restauration 100 von dem Werkzeug 103 mit einem vorgegebenen Werkzeugradius 105 erreichbar oder berührbar sind.

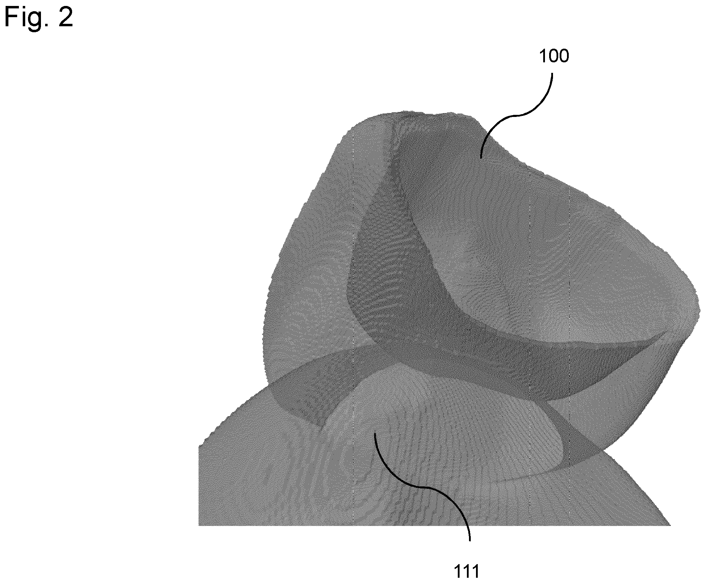

Fig. 2 zeigt eine Ansicht einer voxelisierten, diskreten dentalen Restauration 100. Beim Voxelisieren wird das Volumen der ursprünglichen räumlichen Form 107 der dentalen Restauration 100 mittels diskreter quaderförmiger Voxel gefüllt. Nach dem Voxelisieren wird die räumliche Form 107 der dentalen Restauration 100 nicht durch ein räumliches Oberflächengitter angegeben, sondern durch eine diskrete Füllung des eingenommenen Raumes durch einzelne Voxel. Diese Voxel sind in einem kartesischen Gitter 111 angeordnet.

Durch die Voxelisierung der räumlichen Form 107 können die Berechnungsergebnisse bei einer Krümmungsberechnung der Oberfläche vereinfacht und verbessert werden. Gegenüber einer Berechnung auf Basis des Oberflächengitters können Diskretisierungsartefakte verhindert werden.

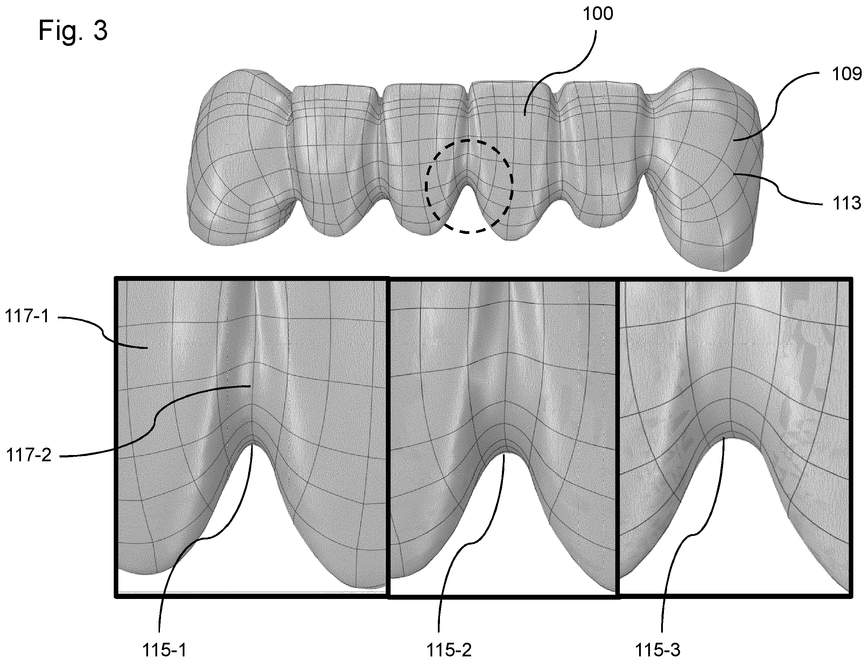

Fig. 3 zeigt eine Ansicht der dentalen Restauration 100 mit drei verschiedenen Krümmungsradien 115-1 bis 115-3 im Übergangsbereich zwischen zwei Zähnen. Die ursprünglich gestaltete räumliche Form 107 der dentalen Restauration 100 weist im Übergangsbereich des Oberflächengitters 109 zwischen den Zähnen beispielsweise den Krümmungsradius 115-1 auf.

Soll ein Werkzeug 103 mit größerem Werkzeugradius 105 verwendet werden, wird die räumliche Form 107 der dentalen Restauration 100 durch das Verfahren im Übergangsbereich angepasst, so dass der Krümmungsradius 115-2 zwischen den Zähnen größer oder gleich des Werkzeugradius 105 ist. Wird ein Werkzeug 103 mit noch größerem Werkzeugradius 105 verwendet, ergibt sich ein noch größerer Krümmungsradius 115-3 im Übergangsbereich. Dadurch kann auch im Übergangsbereich sichergestellt werden, dass alle Punkte der Oberfläche von dem Werkzeug 103 berührbar sind und die dentale Restauration 100 herstellbar ist.

Zunächst wird hierzu die Oberfläche der räumlichen Form 107 in zwei Arten von Unterbereichen 117-1 und 117-2 unterteilt. Die erste Art von Unterbereich 117-1 ist durch das Werkzeug 103 erreichbar, da dieser einen Krümmungsradius 115-1 aufweist, der größer als der Werkzeugradius 105 ist.

Die zweite Art von Unterbereich 117-2 ist durch das Werkzeug 103 nicht erreichbar, da dieser einen Krümmungsradius 115-2 aufweist, der kleiner als der Werkzeugradius 105 ist. In dem Unterbereich 117-2 werden die Vertices 113 des Oberflächengitters 109 in Richtung der voxelisierten, diskreten dentalen Restauration 100 verschoben. Durch die Unterscheidung der Unterbereiche 117-1 und 117-2 ist es möglich, das Verfahren zielgenau durchzuführen, so dass Rechenzeit eingespart werden kann.

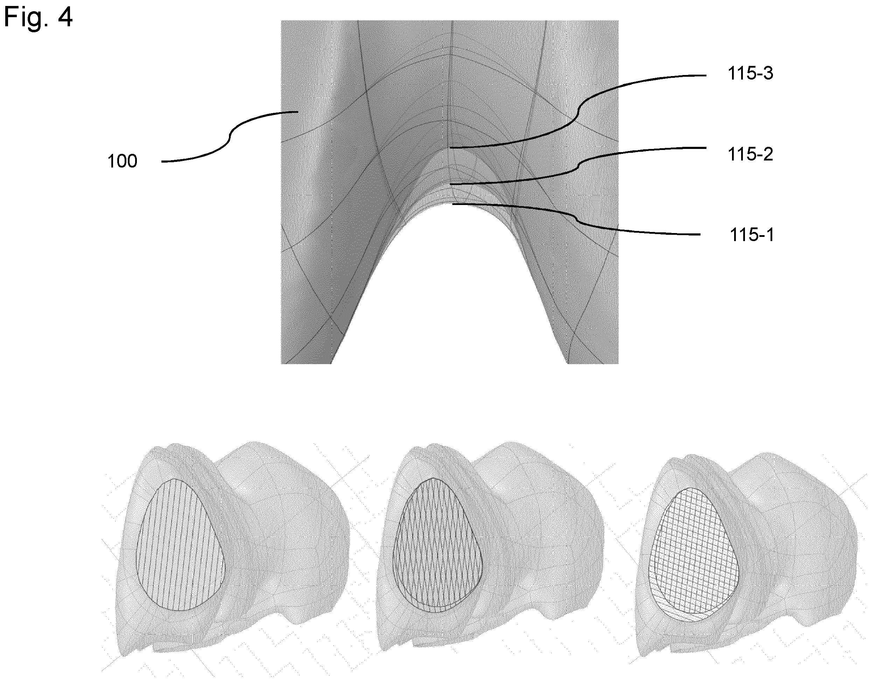

Fig. 4 zeigt ebenfalls Ansichten dentaler Restaurationen 100 mit unterschiedlichen Krümmungsradien 115-1 bis 115-3. Die Anpassung des Datensatzes wird durch die Optimierung einer Fehlerfunktion erreicht, die einen Abstand zu der voxelisierten, diskreten Form 107 der dentalen Restauration 100 und ein Laplacian-Smoothing-Zielfunktion -Glättungsziel umfasst. Ein Gradientenverfahren kann iterativ angewendet werden, um die Oberfläche zu optimieren. Dies kann von einem iterativen Ändern der Topologie unterstützt werden, bei dem die längsten Kanten gespiegelt werden (Flip longest Edges).

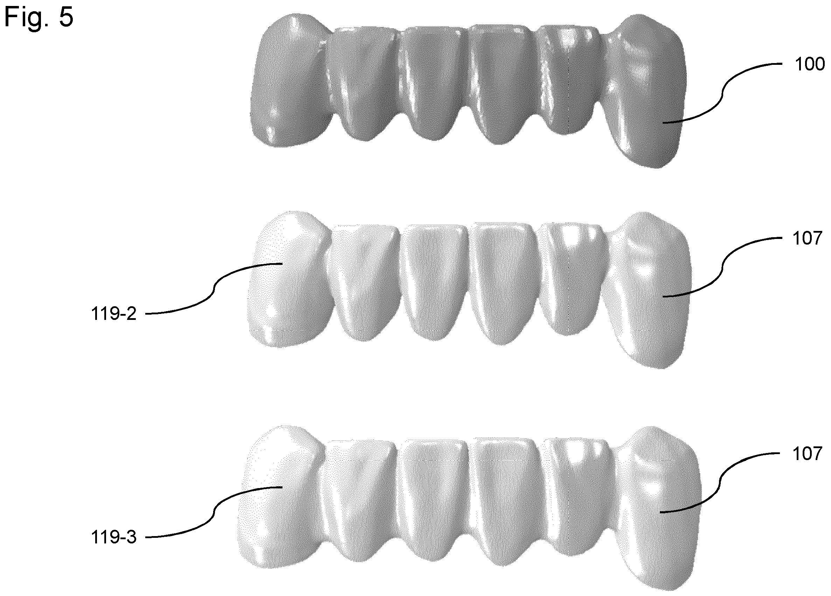

Fig. 5 zeigt Ansichten dentaler Restaurationen 100 aus unterschiedlichen Herstellungsmaterialien 119-1 und 119-2. Das Herstellungsmaterial 119 der dentalen Restauration 100 kann beispielsweise ebenfalls auf Basis des Krümmungsradius 115 an der Oberfläche der wiedergegebenen räumlichen Form 107 berechnet werden.

Weist die angepasste räumliche Form 107 einen kleineren Krümmungsradius als die ursprüngliche Form 107 auf, wird ein Herstellungsmaterial 119-2 mit einer höheren Festigkeit verwendet. Weist demgegenüber die angepasste räumliche Form 107 einen größeren Krümmungsradius als die ursprüngliche Form 107 auf, wird ein Herstellungsmaterial 119-1 mit einer geringeren Festigkeit verwendet.

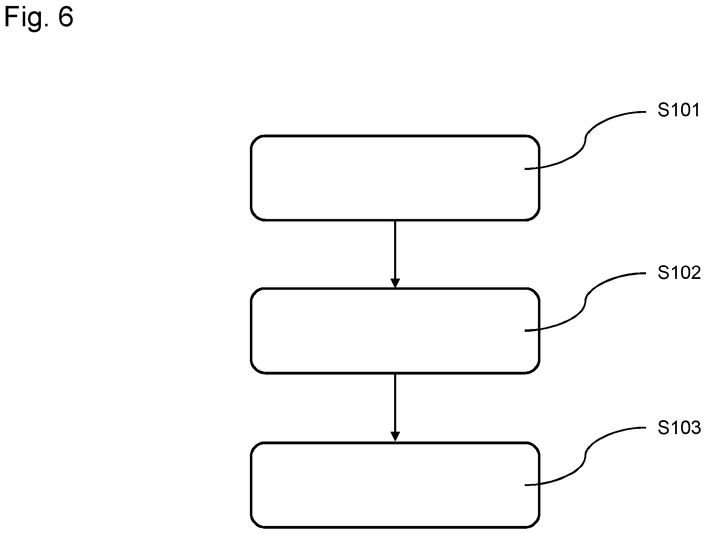

Fig. 6 zeigt ein Blockdiagramm eines Verfahrens zum Herstellen der dentalen Restauration 100. In Schritt S101 wird der Datensatz bereitgestellt, der die räumliche Form 107 der dentalen Restauration 100 wiedergibt. In Schritt S102 wird das Werkzeug 103 zum Herstellen der dentalen Restauration 100 ausgewählt, das einen vorgegebenen Werkzeugradius 105 aufweist. In Schritt S103 wird der Datensatz derart angepasst, dass der Krümmungsradius 115 an der Oberfläche der wiedergegebenen räumlichen Form 107 größer oder gleich zu dem Werkzeugradius 105 ist.

Die so angepasste räumliche Form 107 der dentalen Restauration 100 kann anschließend mittels eines Fräsverfahrens aus einem dentalen Rohling hergestellt werden, bei dem ein entsprechendes Fräswerkzeug oder ein Bohrer verwendet wird.

Gemäß dem Verfahren kann die räumliche Form 107 der dentalen Restauration 100 geändert werden, indem Herstellungsmaterial hinzugefügt oder entfernt wird. Beim Auswählen eines Werkzeugs 103 mit einem größeren Werkzeugradius 105, wird Herstellungsmaterial 119 hinzugefügt. Beim Auswählen eines Werkzeugs 103 mit einem kleineren Werkzeugradius 105, wird hingegen Herstellungsmaterial entfernt.

Das Verfahren kann durch ein Computerprogramm auf einem Computer ausgeführt werden, das die einzelnen Schritte implementiert. Durch das Verfahren kann sichergestellt werden, dass die dentale Restauration 100 mit dem ausgewählten Werkzeug 103 exakt hergestellt werden kann.

Alle in Verbindung mit einzelnen Ausführungsformen der Erfindung erläuterten und gezeigten Merkmale können in unterschiedlicher Kombination in dem erfindungsgemäßen Gegenstand vorgesehen sein, um gleichzeitig deren vorteilhafte Wirkungen zu realisieren.

Alle Verfahrensschritte können durch Vorrichtungen implementiert werden, die zum Ausführen des jeweiligen Verfahrensschrittes geeignet sind. Alle Funktionen, die von gegenständlichen Merkmalen ausgeführt werden, können ein Verfahrensschritt eines Verfahrens sein.

Der Schutzbereich der vorliegenden Erfindung ist durch die Ansprüche gegeben und wird durch die in der Beschreibung erläuterten oder den Figuren gezeigten Merkmale nicht beschränkt.

## Patentansprüche

1. Verfahren zum Herstellen einer dentalen Restauration (100), mit den Schritten:
- Bereitstellen (S101) eines Datensatzes, der die räumliche Form (107) der dentalen Restauration (100) wiedergibt;
- Auswählen (S102) eines Werkzeuges (103) zum Herstellen der dentalen Restauration (100), das einen vorgegebenen Werkzeugradius (105) aufweist; und
- Anpassen (S103) des Datensatzes, so dass ein Krümmungsradius (115) an der Oberfläche der wiedergegebenen räumlichen Form (107) größer oder gleich zu dem Werkzeugradius (105) ist; und
- die räumliche Form (107) der dentalen Restauration (100) durch ein Oberflächengitter (109) wiedergegeben wird, das in ein diskretes kartesisches Gitter (111) umgewandelt wird, **dadurch gekennzeichnet, dass** der Krümmungsradius (115) an der Oberfläche der wiedergegebenen räumlichen Form (107) auf Basis des diskreten kartesischen Gitters (111) berechnet wird.

2. Verfahren nach Anspruch 1, wobei der Datensatz so angepasst wird, dass alle Punkte an der Oberfläche der wiedergegebenen räumlichen Form (107) von dem Werkzeug (103) berührbar sind.

3. Verfahren nach Anspruch 1, wobei das diskrete kartesische Gitter (111) derart angepasst wird, dass ein Krümmungsradius (115) an der Oberfläche der wiedergegebenen räumlichen Form (107) größer oder gleich des Werkzeugradius (105) ist.

4. Verfahren nach Anspruch 3, wobei die Vertices (113) des Oberflächengitters (109) in Richtung des angepassten diskreten kartesischen Gitters (111) verschoben werden.

5. Verfahren nach Anspruch 4, wobei eine Fehlerfunktion optimiert wird, die auf einer Entfernung zwischen den jeweiligen Vertices (113) des Oberflächengitters (109) und den Punkten des diskreten kartesischen Gitters (111) basiert und/oder einer Laplace-Glättung basiert.

6. Verfahren nach einem der vorangehenden Ansprüche, wobei die Oberfläche der wiedergegebenen räumlichen Form (107) in einen ersten Unterbereich (117-1), der von dem Werkzeug (103) berührt werden kann, und einen zweiten Unterbereich (117-2) unterteilt wird, der nicht von dem Werkzeug (103) berührt werden kann.

7. Verfahren nach einem der vorangehenden Ansprüche, wobei ein Herstellungsmaterial (119) der dentalen Restauration (100) auf Basis des Krümmungsradius (115) an der Oberfläche der wiedergegebenen räumlichen Form (107) ausgewählt wird.

8. Verfahren nach einem der vorangehenden Ansprüche, wobei das Werkzeug (103) ein Fräswerkzeug oder ein Bohrer ist.

9. Verfahren nach einem der vorangehenden Ansprüche, wobei die dentale Restauration (100) auf Basis des Datensatzes hergestellt wird.

10. Computerprogramm, umfassend Befehle, die bei der Ausführung des Computerprogramms durch einen Computer diesen veranlassen, das Verfahren nach einem der Ansprüche 1 bis 9 auszuführen.

11. Herstellungsgerät (200) zum Herstellen einer dentalen Restauration (100) mit einem Computerprogramm nach Anspruch 10.

## Claims

1. Method for producing a dental restoration (100), comprising the steps of:
- providing (S101) a data set which represents the spatial shape (107) of the dental restoration (100);
- selecting (S102) a tool (103) for producing the dental restoration (100), which has a predetermined tool radius (105); and
- adapting (S103) the data set such that a radius of curvature (115) at the surface of the represented spatial shape (107) is greater than or equal to the tool radius (105); and
- the spatial shape (107) of the dental restoration (100) is represented by a surface mesh (109) which is converted into a discrete Cartesian grid (111),
**characterized in that**
the radius of curvature (115) at the surface of the represented spatial shape (107) is calculated on the basis of the discrete Cartesian grid (111).

2. Method according to claim 1, wherein the data set is adapted such that all points at the surface of the represented spatial shape (107) are touchable by the tool (103).

3. Method according to claim 1, wherein the discrete Cartesian grid (111) is adapted such that a radius of curvature (115) at the surface of the represented spatial shape (107) is greater than or equal to the tool radius (105).

4. Method according to claim 3, wherein the vertices (113) of the surface mesh (109) are displaced in the direction of the adapted discrete Cartesian grid (111).

5. Method according to claim 4, wherein an error function is optimized which is based on a distance between the respective vertices (113) of the surface mesh (109) and the points of the discrete Cartesian grid (111) and/or is based on a Laplacian smoothing.

6. Method according to any one of the preceding claims, wherein the surface of the represented spatial shape (107) is subdivided into a first subregion (117-1), which can be touched by the tool (103), and a second subregion (117-2), which cannot be touched by the tool (103).

7. Method according to any one of the preceding claims, wherein a production material (119) of the dental restoration (100) is selected on the basis of the radius of curvature (115) at the surface of the represented spatial shape (107).

8. Method according to any one of the preceding claims, wherein the tool (103) is a milling tool or a drill.

9. Method according to any one of the preceding claims, wherein the dental restoration (100) is produced on the basis of the data set.

10. Computer program comprising instructions which, when the computer program is executed by a computer, cause said computer to carry out the method according to any one of claims 1 to 9.

11. Production device (200) for producing a dental restoration (100) with a computer program according to claim 10.

## Revendications

1. Procédé de fabrication d'une restauration dentaire (100), comprenant les étapes consistant à :
- fournir (S101) un ensemble de données qui reproduit la forme spatiale (107) de la restauration dentaire (100) ;
- sélectionner (S102) un outil (103) pour fabriquer la restauration dentaire (100), lequel présente un rayon d'outil (105) prédéterminé ; et
- adapter (S103) l'ensemble de données de sorte qu'un rayon de courbure (115) à la surface de la forme spatiale (107) reproduite soit supérieur ou égal au rayon d'outil (105) ; et
- la forme spatiale (107) de la restauration dentaire (100) est reproduite par un maillage de surface (109) qui est converti en une grille cartésienne discrète (111),
**caractérisé en ce que**
le rayon de courbure (115) à la surface de la forme spatiale (107) reproduite est calculé sur la base de la grille cartésienne discrète (111).

2. Procédé selon la revendication 1, dans lequel l'ensemble de données est adapté de sorte que tous les points à la surface de la forme spatiale (107) reproduite puissent être touchés par l'outil (103).

3. Procédé selon la revendication 1, dans lequel la grille cartésienne discrète (111) est adaptée de sorte qu'un rayon de courbure (115) à la surface de la forme spatiale (107) reproduite soit supérieur ou égal au rayon d'outil (105).

4. Procédé selon la revendication 3, dans lequel les sommets (113) du maillage de surface (109) sont déplacés en direction de la grille cartésienne discrète (111) adaptée.

5. Procédé selon la revendication 4, dans lequel une fonction d'erreur est optimisée, laquelle est basée sur une distance entre les sommets (113) respectifs du maillage de surface (109) et les points de la grille cartésienne discrète (111) et/ou est basée sur un lissage laplacien.

6. Procédé selon l'une quelconque des revendications précédentes, dans lequel la surface de la forme spatiale (107) reproduite est subdivisée en une première sous-région (117-1), qui peut être touchée par l'outil (103), et une seconde sous-région (117-2), qui ne peut pas être touchée par l'outil (103).

7. Procédé selon l'une quelconque des revendications précédentes, dans lequel un matériau de fabrication (119) de la restauration dentaire (100) est sélectionné sur la base du rayon de courbure (115) à la surface de la forme spatiale (107) reproduite.

8. Procédé selon l'une quelconque des revendications précédentes, dans lequel l'outil (103) est un outil de fraisage ou un foret.

9. Procédé selon l'une quelconque des revendications précédentes, dans lequel la restauration dentaire (100) est fabriquée sur la base de l'ensemble de données.

10. Programme informatique comprenant des instructions qui, lors de l'exécution du programme informatique par un ordinateur, amènent celui-ci à mettre en œuvre le procédé selon l'une quelconque des revendications 1 à 9.

11. Dispositif de fabrication (200) pour fabriquer une restauration dentaire (100) avec un programme informatique selon la revendication 10.
